# FASCICULE DE BREVET EUROPEEN

(11) **EP 2 791 864 B1**
(45) Date de publication et mention de la délivrance du brevet: **02.02.2022**
(21) Numéro de dépôt: 12824691.5
(22) Date de dépôt: 11.12.2012
(51) Int. Cl.: G06K 9/00, G01N 21/65, G02B 21/36

(54) **PROCEDE D'ANALYSE D'UN ECHANTILLON BIOLOGIQUE, ET DISPOSITIF METTANT EN OEUVRE CE PROCEDE**
VERFAHREN ZUR ANALYSE EINER BIOLOGISCHEN PROBE UND VERWANDTE VORRICHTUNG
METHOD OF ANALYSIS OF A BIOLOGICAL SAMPLE AND DEVICE IMPLEMENTING THIS METHOD

(30) Priorité: 12.12.2011 FR 1161480
(43) Date de publication de la demande: 22.10.2014
(73) Titulaire: Tribvn, 92320 Chatillon (FR); Université De Reims Champagne-Ardenne, 51724 Reims Cedex (FR); Association pour la Recherche et le Développement des Méthodes et Processus Industriels, 75006 Paris (FR)
(72) Inventeur: KLOSSA, Jacques, F-92200 Neuilly-sur-Seine (FR); MANFAIT, Michel, F-51380 Verzy (FR); ANGULO, Jesus, F-77300 Fontainebleau (FR)
(74) Mandataire: IPAZ
(86) Numéro de dépôt international: PCT/FR2012/052872
(87) Numéro de publication internationale: WO 2013/088053

(56) Documents cités:
- US-A1- 2001 050 999
- US-A1- 2002 090 120
- US-A1- 2007 029 462
- US-A1- 2007 127 022
- US-A1- 2007 153 268
- US-A1- 2010 093 015
- JAMES W CHAN ET AL: "Raman Spectroscopy: Chemical Analysis of Biological Samples", ADVANCES IN BIOPHOTONICS NATO SCIENCE SERIES, I: LIFE AND BEHAVIOURAL SCIENCES; FROM FUNDAMENTAL PRINCIPLES TO HEALTH, ENVIRONMENT, SECURITY AND DEFENCE APPLICATIONS,, vol. 369, 1 janvier 2005 (2005-01-01), pages 148-168, XP008157215, ISBN: 978-1-58603-540-2
- J. CHAN ET AL.: "Raman spectroscopy and microscopy of individual cells and cellular components", LASER & PHOTONICS REVIEWS, vol. 5, no. 2, 2008, pages 325-349, XP002685687,
- G. Popescu: "Quantitative Phase Imaging of Nanoscale Cell Structure and Dynamics" In: B.P. Jena (Eds.): "Methods in cell biology", 2008, Elsevier, XP002685688, vol. 90, pages 87-115, Section II. "Methods", Subsection B. "Full-Field QPI"

## Description

### Domaine technique

La présente invention concerne un procédé d'analyse d'un échantillon biologique. Elle concerne aussi un dispositif mettant en œuvre ce procédé.

Un tel procédé ou dispositif permet de préférence à un utilisateur d'acquérir des données discriminantes sur des éléments d'intérêts représentatifs d'un échantillon biologique non coloré et sans préparation difficile de l'échantillon. Le domaine de l'invention est plus particulièrement celui de l'analyse d'un échantillon biologique à l'échelle microscopique.

### Etat de la technique antérieure

Les spécimens biologiques sont habituellement étudiés au microscope à la recherche de signatures morphologiques (colorations de contraste) ou fonctionnelles (immunohistochimie) après "techniquage" sur une lame de verre de format standardisé.

De nouvelles techniques de biophotonique permettent d'accéder à des propriétés physiques ou moléculaires intrinsèques aux objets d'intérêt étudiés (par exemple cellules ou tissus) et ne nécessitent pas de marquage préalable (techniques « label free »).

Ces techniques restent cependant dépendantes d'une phase préalable de repérage d'une quantité représentative des objets d'intérêt sur l'échantillon afin d'y acquérir des signatures discriminantes physiques ou moléculaires.

Pour le repérage, un opérateur humain repère visuellement les objets d'intérêts. On se contente de repérer typiquement une centaine d'objets d'intérêts, parmi une population pouvant atteindre plusieurs centaines de milliers d'objets.

Compte tenu du petit nombre d'objets d'intérêts repérés, le résultat de l'analyse peut comprendre une erreur statistique non négligeable. En outre, le choix des objets d'intérêts est subjectif, ce qui fait que ce type de protocole de repérage et donc d'analyse n'est pas toujours reproductible de manière satisfaisante.

Le document US2010/0093015A1 décrit une méthode et un système spectrocopique pour classifier et traiter des cellules, mettant en œuvre une spectroscopie Raman.

Le but de l'invention est de proposer un procédé d'analyse d'un échantillon biologique, présentant au moins un des avantages techniques suivants :
- la possibilité d'être mis en œuvre sur un échantillon préparé sur un support standard, typiquement sur une lame de verre, et/ou
- une meilleure reproductibilité par rapport à l'état de la technique antérieure, et/ou
- une meilleur représentativité ou exactitude des résultats de l'analyse par rapport à l'état de la technique antérieure,
et un dispositif mettant en œuvre ce procédé.

### Exposé de l'invention

Cet objectif est atteint avec un procédé tel que défini dans la revendication 1.

Pendant l'acquisition de données discriminantes, l'échantillon biologique peut être dénué de colorant ou de marqueur additif.

L'image de la zone d'observation peut être obtenue par un assemblage de plusieurs champs d'image obtenus distinctement.

L'image de la zone d'observation peut être une image comprenant des pixels répartis sur au moins deux dimensions spatiales, l'obtention de l'image de la zone d'observation comprenant de préférence une acquisition d'au moins 50 000 pixels par seconde.

L'échantillon peut être éclairé dans un intervalle de longueur d'ondes compris entre 400nm et 500nm pendant l'obtention de l'image de la zone d'observation.

Le procédé selon l'invention peut comprendre en outre une localisation de compartiments cellulaires des objets d'intérêts. La localisation de compartiments cellulaires est de préférence réalisée sur une image à plus haute résolution spatiale que l'image de la zone d'observation.

Le procédé selon l'invention peut comprendre en outre une classification des données discriminantes acquises par type cellulaire, par une mise en relation entre les données discriminantes acquises et une base d'apprentissage mettant en relation un type d'objet d'intérêt avec des caractéristiques de données discriminantes.

Le procédé selon l'invention peut comprendre en outre une classification des données discriminantes acquises par type de compartiment cellulaire, par une mise en relation entre les données discriminantes acquises et une base d'apprentissage mettant en relation un type de compartiment cellulaire avec des caractéristiques de données discriminantes.

Les données discriminantes peuvent être des données non morphologiques.

Le procédé selon l'invention peut comprendre en outre, après l'acquisition de données discriminantes :
- une coloration de l'échantillon par addition d'un colorant, et/ou
- une acquisition de données morphologiques d'au moins un objet d'intérêt déterminé, sur l'échantillon biologique (de préférence coloré par le colorant), les données morphologiques étant collectées via des moyens d'imagerie agencés pour construire une image de l'échantillon (de préférence tel que coloré par le colorant).

Les données morphologiques peuvent comprendre des données d'imagerie multi-spectrale de l'échantillon et/ou d'imagerie à différents plans focaux (« multi-Z ») des objets d'intérêts de l'échantillon.

Le procédé selon l'invention peut comprendre en outre une classification des données morphologiques acquises par type cellulaire, par une mise en relation entre les données morphologiques acquises et une base d'apprentissage mettant en relation un type d'objet d'intérêt avec des caractéristiques de données morphologiques.

Le procédé selon l'invention peut comprendre en outre une classification des données morphologiques acquises par type de compartiment cellulaire, par une mise en relation entre les données morphologiques acquises et une base d'apprentissage mettant en relation un type de compartiment cellulaire avec des caractéristiques de données morphologiques.

Le procédé selon l'invention peut comprendre en outre une fusion et/ou une corrélation entre les données discriminantes et les données morphologiques d'au moins un même objet intérêt.

L'échantillon biologique peut comprendre un frottis sanguin, un prélèvement cytologique ou une coupe d'un tissu biologique.

L'échantillon biologique est de préférence étalé sur un support rigide, de préférence sur une lame de verre.

Suivant encore un autre aspect de l'invention, il est proposé un dispositif tel que défini dans la revendication 13.

Les moyens pour acquérir des données discriminantes peuvent être prévus pour acquérir des données discriminantes alors que l'échantillon biologique est dénué de colorant ou de marqueur additif.

Les moyens pour obtenir une image de la zone d'observation peuvent être agencés pour l'obtention d'une image de la zone d'observation par un assemblage de plusieurs champs d'image obtenus distinctement.

L'image de la zone d'observation peut être une image comprenant des pixels répartis sur au moins deux dimensions spatiales, les moyens pour obtenir une image de la zone d'observation étant de préférence agencés pour acquérir au moins 50 000 pixels d'image de la zone d'observation par seconde.

Les moyens pour obtenir une image de la zone d'observation peuvent être agencés pour éclairer l'échantillon dans un intervalle de longueur d'ondes compris entre 400nm et 500nm pendant l'obtention de l'image de la zone d'observation.

Le dispositif selon l'invention peut comprendre des moyens pour localiser des compartiments cellulaires des objets d'intérêts. Les moyens pour localiser des compartiments cellulaires peuvent être agencés pour localiser des compartiments cellulaires sur une image à plus haute résolution spatiale que l'image de la zone d'observation.

Le dispositif selon l'invention peut comprendre en outre des moyens pour classifier des données discriminantes acquises par type cellulaire, par une mise en relation entre les données discriminantes acquises et une base d'apprentissage mettant en relation un type d'objet d'intérêt avec des caractéristiques de données discriminantes.

Le dispositif selon l'invention peut comprendre en outre des moyens pour classifier des données discriminantes acquises par type de compartiment cellulaire, par une mise en relation entre les données discriminantes acquises et une base d'apprentissage mettant en relation un type de compartiment cellulaire avec des caractéristiques de données discriminantes.

Les données discriminantes peuvent être des données non morphologiques.

Le dispositif selon l'invention peut comprendre en outre des moyens pour acquérir (de préférence après une acquisition de données discriminantes non morphologiques) sur l'échantillon biologique (de préférence coloré par un colorant) des données morphologiques d'au moins un objet d'intérêt déterminé, agencés pour collecter les données morphologiques via des moyens d'imagerie agencés pour construire une image de l'échantillon (de préférence tel que colorée par le colorant).

Les données morphologiques peuvent comprendre des données d'imagerie multi spectrale de l'échantillon et/ou d'imagerie à différents plans focaux des objets d'intérêts de l'échantillon.

Le dispositif selon l'invention peut comprendre en outre des moyens pour classifier des données morphologiques acquises par type cellulaire, par une mise en relation entre les données morphologiques acquises et une base d'apprentissage mettant en relation un type d'objet d'intérêt avec des caractéristiques de données morphologiques.

Le dispositif selon l'invention peut comprendre en outre des moyens pour classifier des données morphologiques acquises par type de compartiment cellulaire, par une mise en relation entre les données morphologiques acquises et une base d'apprentissage mettant en relation un type de compartiment cellulaire avec des caractéristiques de données morphologiques.

Le dispositif selon l'invention peut comprendre en outre des moyens pour faire une fusion et/ou une corrélation entre les données discriminantes et les données morphologiques d'au moins un même objet intérêt.

L'échantillon biologique peut comprendre un frottis sanguin, un prélèvement cytologique ou une coupe d'un tissu biologique.

Le dispositif selon l'invention comprend en outre de préférence des moyens pour étaler l'échantillon biologique sur un support rigide, de préférence sur une lame de verre.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- les figures 1 et 2 illustrent un mode de réalisation préféré de dispositif selon l'invention, la figure 1 dans sa position pour l'acquisition d'image d'une zone d'observation ou pour l'imagerie multi-spectrale et/ou multi-Z ou pour l'acquisition d'une imagerie de phase quantitative, la figure 2 dans sa position pour l'acquisition de données discriminantes Raman,
- la figure 3 illustre des organigrammes d'étapes d'un procédé selon l'invention, d'abord selon une approche générale, puis pour différents exemples particuliers de mise en œuvre,
- les figures 4 à 8 illustrent de manière schématique différentes étapes d'un procédé selon l'invention,
- les figures 9 à 11 sont des vues réelles d'un échantillon biologique pour lequel on repère des objets d'intérêts,
- la figure 12 illustre une interface d'une plate forme logicielle pour une visualisation d'une image de zone d'observation numérisée (lame virtuelle), affichée sur l'écran 42, la localisation/visualisation des objets d'intérêt, leur classification,
- la figure 13 illustre une interface d'une plate forme logicielle pour l'acquisition de données discriminantes sur un objet d'intérêt, affichée sur l'écran 42,
- la figure 14 illustre le principe de l'acquisition de données discriminantes sur un objet d'intérêt, et un exemple de données discriminantes obtenues, et
- la figure 15 illustre différentes images d'un élément nucléé (polynucléaire) lymphocyte obtenues suivant différentes bandes spectrales, et compare l'image acquise 57 par une caméra RVB classique avec l'image couleur 56 reconstituée à partir de plusieurs bandes spectrales.

Les exemples et modes de réalisation décrits par la suite étant nullement limitatifs, on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

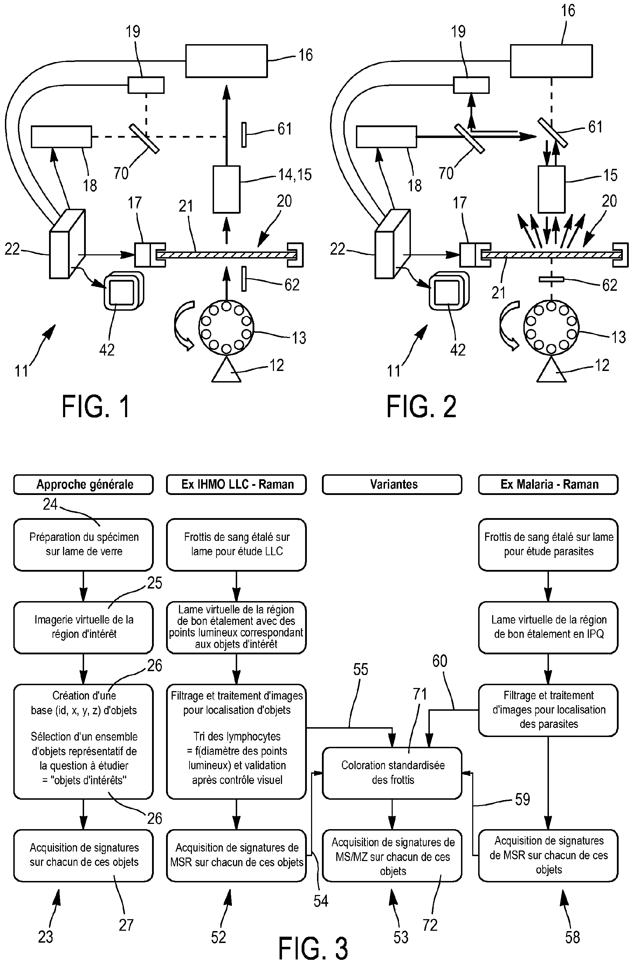

On va tout d'abord décrire, en référence aux figures 1 et 2, un mode de réalisation préférentiel de dispositif 11 selon l'invention pour mettre en œuvre un procédé selon l'invention.

Le dispositif 11 comprend une station de microscopie.

Le dispositif 11 comprend plus exactement les trois modules suivants permettant repérage et acquisition de données sur une lame de verre 21 supportant un échantillon biologique 20.

Le dispositif 11 comprend un module d'imagerie de macroscopie (caméra et objectif, éclairage) permettant d'imager la lame entière et son étiquette à des fins d'identification et l'échantillon à des fins de pré-localisation d'une région d'intérêt sur l'échantillon

Le dispositif 11 comprend un module d'imagerie de microscopie comprenant les composants suivants :
- une source de lumière 12 (tungstène ou LED) et une ligne de focalisation de la lumière. La source de lumière peut produire une lumière blanche dans le visible ou une série de bandes spectrales spécifiques à l'application. Dans l'exemple implémenté, l'utilisateur peut choisir successivement une bande parmi dix au moyen d'une roue à filtre 13 munie de plusieurs filtres de différentes couleurs.
- un jeu d'au moins deux objectifs 14 ou 15 de microscopie monté sur une tourelle pivotante ou sur tirette ; le premier 14 (grossissement 10x à 40x) servant pour l'exploration de l'échantillon et l'obtention d'une image d'une zone d'observation, le second 15 (grossissement 100x ou 150x) pour l'acquisition de données discriminantes sur les objets d'intérêt (données non morphologiques Raman, ou morphologiques multi spectrales et Multi-Z, ou image de phase quantitative par exemple)
- une caméra 16 monochrome et/ou couleur permettant l'acquisition de vues individuelles (« champ image ») projetées par l'objectif 14 ou 15 de microscopie sélectionné sur le capteur CCD de cette caméra,
- un dispositif motorisé 17 de déplacement de la lame 21 sur son support, selon trois directions orthogonales horizontales X-Y et verticale Z, complété en option d'un chargeur automatique de lames.

Le module d'imagerie de microscopie est agencé pour éclairer l'échantillon 20 placé sur la platine motorisée 17 par la source 12, et pour capter sur le capteur 16 et à travers l'objectif 14 ou 15 une image de l'échantillon 20 ainsi éclairé.

Le dispositif 11 comprend un module de micro-spectroscopie Raman comprenant les composants suivants :
- un laser d'excitation 18 agencé pour émettre un faisceau laser dont la longueur d'onde est choisie en fonction de l'application (centrée sur 532 nm pour l'étude d'un frottis sanguin tel que décrit par la suite).
- une ligne optique permettant la focalisation confocale du faisceau laser sur l'échantillon, à travers l'objectif de microscope 15 sélectionné parmi le jeu d'objectifs 14, 15,
- un détecteur Raman 19 et une ligne optique permettant de diriger les signaux Raman vers le détecteur Raman (un réseau complété d'une caméra de détection)

Le module de micro-spectroscopie Raman partage l'objectif 15 et le dispositif motorisé 17 avec le module d'imagerie de microscopie.

Le module de micro-spectroscopie Raman est agencé pour focaliser le faisceau laser de la source 18 sur l'échantillon 20 à travers l'objectif 15 de sorte que l'échantillon ainsi illuminé émette de la lumière, et à capter via l'objectif 15 la lumière émise de manière à la diriger (via un miroir dichroïque 70) sur le détecteur Raman.

Le dispositif 11 comprend des moyens de traitement 22. Ces moyens de traitement comprennent des moyens électroniques et/ou informatiques, comme une unité centrale d'un ordinateur, un microprocesseur, et/ou des moyens électronique analogiques et/ou numériques. Les moyens de traitement sont en outre équipés de moyens d'enregistrement de données numériques tel un disque dur, une carte SD, etc. Les moyens 22 sont aussi agencés pour piloter le dispositif 11. Plus exactement, les moyens de traitement 22 sont agencés pour mettre en œuvre une plate forme logicielle de pilotage du dispositif 11. Les moyens de traitement 22 sont reliés à un écran de visualisation 42. L'écran 42 est agencé pour afficher le champ d'image de la caméra 16 imageant une zone donnée de l'échantillon.

Les moyens de traitement 22 sont agencés pour :
- recevoir des données discriminantes non morphologiques Raman en provenance du détecteur Raman 19 et des données (discriminantes morphologiques) visuelles ou d'imagerie en provenance de la caméra 16,
- traiter ces données,
- mémoriser/enregistrer les données brutes ou traitées,
- piloter l'acquisition de spectre Raman, en particulier commander l'émission d'un faisceau laser par la source 18 et le déplacement, par la platine motorisée 17, de l'échantillon 20 par rapport à l'objectif 14 ou 15,
- piloter l'obtention par la caméra 16 d'une image d'une zone d'observation de l'échantillon ou d'images multi spectrales ou multi-Z de l'échantillon, en commandant le déplacement, par la platine motorisée 17, de l'échantillon 20 par rapport à l'objectif 14 ou 15,
- piloter le passage du dispositif 11 entre sa position pour l'acquisition d'image d'une zone d'observation ou pour l'imagerie multi-spectrale et/ou multi-Z (figure 1) et sa position pour l'acquisition de données discriminantes Raman (la figure 2), en commandant le basculement d'un miroir 61 ou l'ouverture/fermeture d'un obturateur 62,
- envoyer pour affichage des données brutes et/ou traitées sur l'écran 42.

Le miroir de commutation 61 et l'obturateur 62 permettent de passer entre le mode du dispositif 11 pour l'acquisition d'une image d'une zone d'observation ou pour l'imagerie multi-spectrale et/ou multi-Z et le mode du dispositif 11 pour l'acquisition de données discriminantes Raman.

On va maintenant décrire, en référence aux figures 1 à 8, un mode de réalisation préférentiel de procédé selon l'invention 23 d'analyse de l'échantillon biologique 20. L'échantillon biologique 20 comprend des objets biologiques, typiquement des cellules biologiques, de préférence nucléées. L'échantillon biologique 20 est étalé, et de préférence séché, sur un support rigide (typiquement sur une lame de verre).

En référence à la figure 3, le procédé d'analyse 23 comprend de manière générale :
- une préparation 24 de l'échantillon biologique,
- une obtention 25, par le module d'imagerie de microscopie, d'une image d'une zone d'observation de l'échantillon par une imagerie optique de l'échantillon (plus précisément par microscopie optique, éventuellement selon un plan image défocalisé par rapport à tout plan focal contenant les objets d'intérêts, ou éventuellement par Image de Phase Quantitative (IPQ) pour laquelle la caméra 16 est une camera de phase quantitative), et une mémorisation, par les moyens de traitement 22 (plus précisément par ses moyens d'enregistrement) de cette image sous forme numérisée, cette image numérisée formant une lame virtuelle dans le cas d'un assemblage de plusieurs champs d'observation de microscopie optique par la caméra 16, puis
- une analyse 26, par les moyens de traitement 22, de l'image numérisée et une détermination par les moyens de traitement 22 et sur cette image numérisée, d'objets biologiques d'intérêt parmi les objets biologiques dans l'échantillon ; cette analyse est de préférence effectuée de manière automatique par des moyens électroniques et/ou informatiques (moyens de traitement 22), puis
- pour au moins un (de préférence plusieurs, de manière encore plus préférentielle pour chaque) objet d'intérêt déterminé, une acquisition 27 de données discriminantes (ou « signatures ») de cet objet d'intérêt directement sur l'échantillon, ladite acquisition ciblant un endroit spécifique de l'échantillon où se trouve l'objet d'intérêt en étant guidée par les moyens de traitement 22 au moyen de l'image numérisée. Les données discriminantes peuvent être des données non morphologiques telles que des données moléculaires (c'est-à-dire relative à la composition moléculaire de l'objet d'intérêt) acquises par exemple par micro-spectroscopie Raman (MSR), ou bien des données morphologiques de l'objet d'intérêt (forme, taille ou texture d'une partie d'une cellule par exemple). Cette acquisition est mise en œuvre par le module d'imagerie de microscopie (par exemple pour des données discriminantes morphologiques ou d'IPQ) ou par le module de micro-spectroscopie Raman (données Raman)

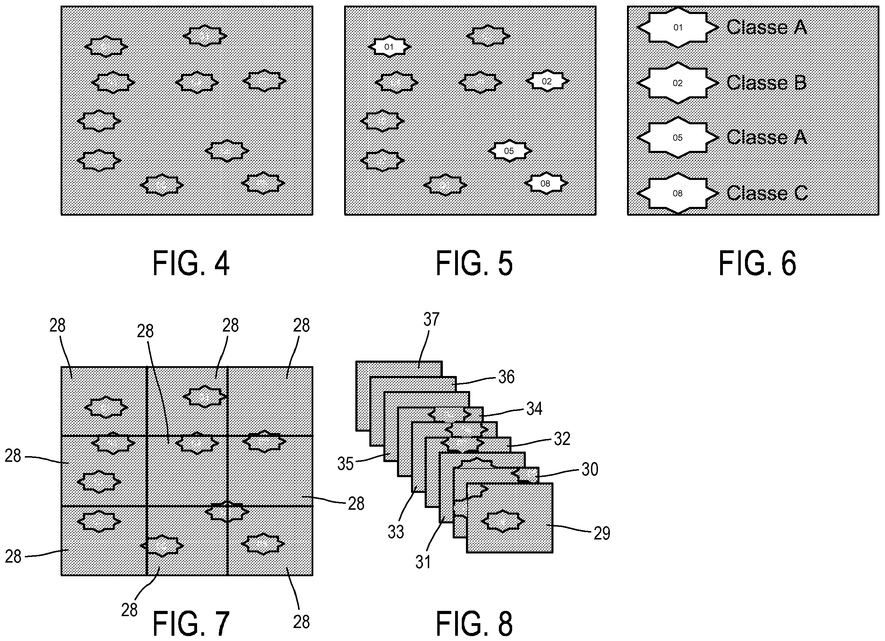

Ces étapes et le principe de l'invention sont résumées sur les figures 4 à 8.

En référence à la figure 4, on dispose de l'échantillon biologique 20 (par exemple du sang) comprenant des objets biologiques référencés 01 à 10 (par exemple des cellules).

En référence à la figure 5, on obtient ensuite l'image numérisée de cet échantillon, et l'analyse de cette image numérisée permet de repérer ou déterminer des objets d'intérêts référencés 01, 02, 05 et 08 (par exemple globules blancs) parmi l'ensemble des cellules (comprenant par exemple globules blancs et globules rouges).

En référence à la figure 6, on acquiert ensuite pour chaque objet d'intérêt 01, 02, 05, 08 les données discriminantes directement sur l'échantillon, en se guidant dans l'échantillon au moyen de l'image numérisée. Dans une étape ultérieure, les données discriminantes sont analysées par les moyens de traitement 22 pour déterminer une classe ou un type d'objet biologique auquel appartient chaque objet d'intérêt pour lequel des données discriminantes ont été acquises.

De façon astucieuse, le grossissement optique (de l'objectif 14) utilisé pour l'obtention de l'image numérisée est plus faible que le grossissement optique (de l'objectif 15) utilisé pour l'acquisition des données discriminantes. Ainsi, on économise de manière astucieuse du temps pour la numérisation de l'échantillon 20 à un faible grossissement qui permet d'explorer rapidement l'échantillon, et on utilise un fort grossissement uniquement à certains endroits spécifiques de l'échantillon où se trouvent les objets d'intérêt pour lesquels on souhaite acquérir des données discriminantes.

Des technologies comme la Micro-Spectroscopie Raman permettent d'acquérir des données discriminantes sur l'échantillon biologique, mais au prix d'un temps d'acquisition long (de l'ordre d'un point par seconde) en comparaison avec l'imagerie microscopique (plusieurs millions de pixels par seconde). Selon l'invention, il est donc envisagé une approche d'exploration par imagerie microscopique (typiquement à faible grossissement optique) préalable à l'étape d'acquisition de données sur les objets d'intérêt (typiquement à un plus fort grossissement optique).

L'une des clés de l'automatisation réside donc dans la stratégie de sélection à "faible résolution" (spatiale et spectrale au sens large) d'un nombre limité, mais statistiquement représentatif de régions d'intérêt (RoI) sur lesquelles seront acquises les données discriminantes de MSR.

L'image numérisée peut être :
- soit, en référence à la figure 7, une lame virtuelle, obtenue par un assemblage, par les moyens de traitement 22, de plusieurs champs d'image 28 de la caméra 16 obtenus distinctement et imageant des zones de l'échantillon jointives les unes par rapport aux autres,
- soit, en référence à la figure 8, un unique champ d'image 29 de la caméra 16, et dans ce cas les étapes d'obtention 25 d'une image d'une zone d'observation, de mémorisation de cette image sous forme numérisée, d'analyse 26 de l'image numérisée et de détermination, d'objets biologiques d'intérêts peuvent être mises en œuvre plusieurs fois de suite pour différents champs d'image 29 à 37 successifs obtenus distinctement et imageant des zones de l'échantillon de préférence jointives (ou non) les unes par rapport aux autres. Ainsi, on analyse la zone d'observation champ par champ.

On va maintenant décrire, en référence aux figures 1 à 3 et 9 à 14, un premier exemple particulier de mode de réalisation de procédé selon l'invention. Dans cet exemple, l'échantillon 20 est un prélèvement sanguin pour lequel on suspecte une Leucémie Lymphoïde Chronique (LLC). Les objets d'intérêts sont des cellules biologiques (colonne 52 de la figure 3).

La préparation 24 de l'échantillon biologique 20 comprend les étapes suivantes :
- du sang est prélevé sur un patient présentant un risque de leucémie.
- le sang est conservé dans des conditions optimales : température (<20°C), à l'abri de la lumière, à l'abri de l'air.
- une goutte du sang est étalée et séchée sur une lame de verre 21 au format standard (25mmx76mm), cette goutte étalée (ou « frottis ») formant l'échantillon 20 à analyser. Cet étalement peut être effectué à la main ou à l'aide d'un dispositif automatique.
- le frottis est conservé à l'abri de l'air et à l'abri de la lumière à température ambiante (< 20°C) pour être analysé dans un délai de 15 jours.

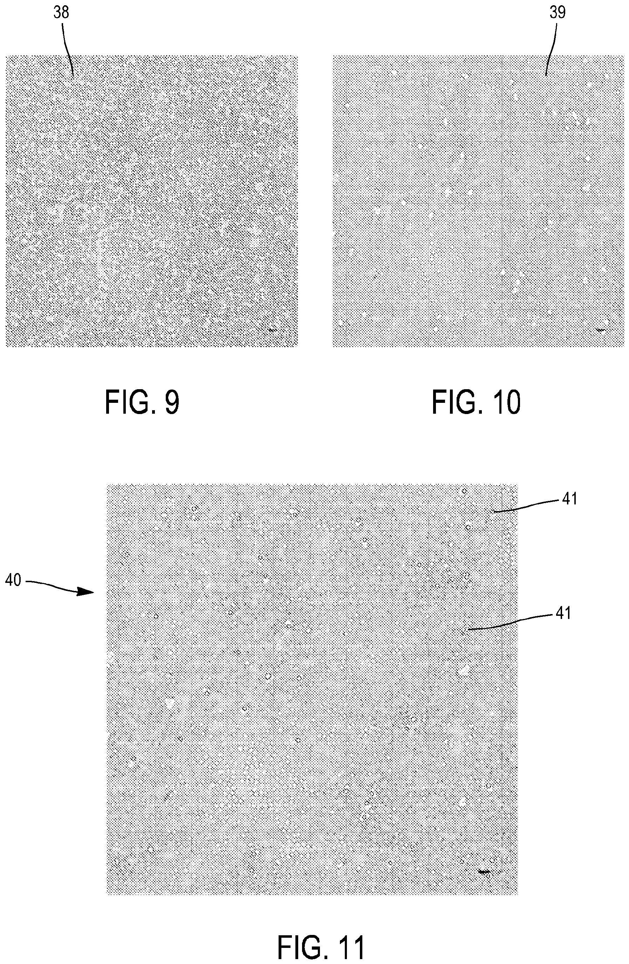

Ensuite, l'obtention 25 d'une image d'une zone d'observation et la mémorisation de cette image sous forme numérisée est réalisée de la manière suivante :
- production d'une image macro, soit avec la caméra macro du module d'imagerie de macroscopie, soit lors d'un passage rapide avec l'objectif 14 de plus faible grossissement du module d'imagerie de microscopie. Dans ce dernier cas, cette acquisition s'effectue par définition manuelle avec contrôle visuel de la zone dite «macro».
- sélection d'une région dite de bon étalement de l'échantillon 20 dans l'image macro. Le but de cette sélection est de disposer de bonnes conditions d'observation morphologique avec des cellules ne se superposant pas sans pour autant être trop étalées (écrasées) avec des hématies au centre clair bien visible. Cette sélection est faite typiquement via l'écran 42 affichant l'image de l'échantillon 20 en cours d'acquisition par la caméra 16.
- imagerie du plan de netteté de la région de bon étalement, par le module d'imagerie de microscopie, et selon un premier paramétrage qui favorise une identification nette des contours des noyaux et du cytoplasme des cellules biologiques de l'échantillon. L'imagerie selon le premier paramétrage utilise une focalisation automatique normale. Cette imagerie selon le premier paramétrage comprend une imagerie de plusieurs champs d'observations successifs et jointifs, et l'image du plan de netteté de la zone d'observation est obtenue par un assemblage de ces champs d'image obtenus distinctement puis est mémorisée sous une forme numérisée dans une mémoire des moyens de traitement 22 (cf Figure 9 qui illustre une partie uniquement de cette image du plan de netteté numérisée, plus exactement un unique champ 38 de caméra 16). L'image du plan de netteté mémorisée sous forme numérique forme ainsi une lame virtuelle de l'échantillon. L'image du plan de netteté de la zone d'observation est donc une image comprenant des pixels répartis sur au moins deux dimensions spatiales, l'obtention de l'image du plan de netteté de la zone d'observation comprenant une acquisition d'au moins 50 000 pixels par seconde (de manière plus préférentielle au moins 1 million de pixels), de préférence à une résolution supérieure ou égale à 2 microns par pixel.
- imagerie de repérage de la région de bon étalement, par le module d'imagerie de microscopie, et selon un second paramétrage qui favorise un effet de réfringence facilitant le repérage et la classification des cellules à noyaux tels que les globules blancs. L'imagerie selon le premier paramétrage utilise une défocalisation de + 4 microns par rapport à l'imagerie selon le premier paramétrage. Ainsi, l'obtention de l'image de repérage de la zone d'observation comprend l'obtention d'une image défocalisée par rapport à un plan des objets d'intérêts. Cette imagerie selon le second paramétrage comprend une imagerie de plusieurs champs d'observations de l'échantillon 20 successifs et jointifs, et l'image de repérage de la zone d'observation est obtenue par un assemblage (par les moyens de traitement 22) de ces champs d'image obtenus distinctement puis est mémorisée sous une forme numérisée dans une mémoire (moyens d'enregistrement des moyens 22) des moyens de traitement 22. L'image de repérage mémorisée sous forme numérique forme ainsi une lame virtuelle de l'échantillon (cf Figure 10 qui illustre une partie uniquement de cette image de repérage numérisée, plus exactement un unique champ 39 de caméra 16). L'image de repérage de la zone d'observation est donc une image comprenant des pixels répartis sur au moins deux dimensions spatiales, l'obtention de l'image de repérage de la zone d'observation comprenant une acquisition d'au moins 50 000 pixels par seconde (de manière plus préférentielle au moins 1 million de pixels), de préférence à une résolution supérieure ou égale à 2 microns par pixel. Quand un frottis sanguin n'est pas coloré, les éléments nucléés et en particulier les lymphocytes sont pas ou très difficilement repérables dans les conditions de réglage normales du microscope. Ainsi, selon l'invention, on utilise une défocalisation de l'objectif 14 pour un effet d'"highlighting" (« mise en évidence ») : la défocalisation provoque un effet de disques lumineux sur un fond "brumeux", permettant le repérage facile des éléments nucléés.

Les paramètres communs pour ces deux imageries sont: objectif 14 de grossissement 20x ou 40x, la source de lumière utilisée est la source blanche 12 à LED filtrée bleu nuit (bande de 30nm centrée à 445nm) par la roue 13 et avec un condenseur fermé à ouverture numérique NA=0,25. Ainsi, l'échantillon 20 est éclairé dans un intervalle de longueur d'ondes compris entre 400nm et 500nm pendant l'obtention de l'image de la zone d'observation, plus précisément entre 415nm et 485 nm, et de manière générale selon une bande de longueur d'ondes centrée entre 400 et 450nm. Une telle bande de couleur bleue favorise le contraste.

Pendant l'obtention d'une image de la zone d'observation, l'échantillon biologique est dénué de colorant ou de marqueur additif par rapport à l'échantillon biologique tel que prélevé et existant à son état naturel. Il n'y a pas de préparation spéciale de l'échantillon, ni fixation ni incorporation de sonde moléculaire. Les échantillons (frottis) sont donc simplement étalés sur la lame rigide de verre sans autre forme de préparation (« label free »), ce qui présente deux avantages, la simplification de la préparation des échantillons et la préservation de la chimie de l'échantillon (en particulier pour des mesures Raman), mais également deux inconvénients, la difficulté à localiser les lymphocytes d'intérêt sur un frottis et à les caractériser de façon robuste sans les colorations habituelles. Cette caractérisation pourra cependant être mise en œuvre après les mesures Raman, ce qui interdira toute mesure spectroscopique Raman ultérieure.

Ensuite, l'analyse 26 de l'image de repérage numérisée et la détermination (ou repérage), sur cette image de repérage numérisée, d'objets biologiques d'intérêts est réalisée de la manière suivante.

L'image de repérage est analysée avec un programme de seuillage par la plate-forme logicielle des moyens de traitement 22. Typiquement plusieurs dizaines de milliers de cellules nucléées sont repérées sur cette image de repérage.

Les moyens de traitement 22 créent et mémorisent une base d'informations comprenant, pour chaque objet (cellule) repéré, un identifiant (typiquement un numéro d'identification propre à chaque objet) et les coordonnées spatiales de cet objet, plus éventuellement la taille et/ou la densité optique de cet objet et/ou d'autres données.

La figure 11 illustre une partie 40 de cette image de repérage, correspondant au champ de la figure 10. Les cellules repérées sont ensuite classées par les moyens de traitement 22 suivant un diagramme bidimensionnel taille/densité optique, permettant une séparation par les moyens de traitement 22 des objets d'intérêts 41 (ici les lymphocytes, délimités chacun par une boucle noir fine sur la figure 11 ajoutée par rapport à la figure 10), qui sont les objets d'intérêt dans le cas de la LLC, grâce à leurs plus petites dimensions.

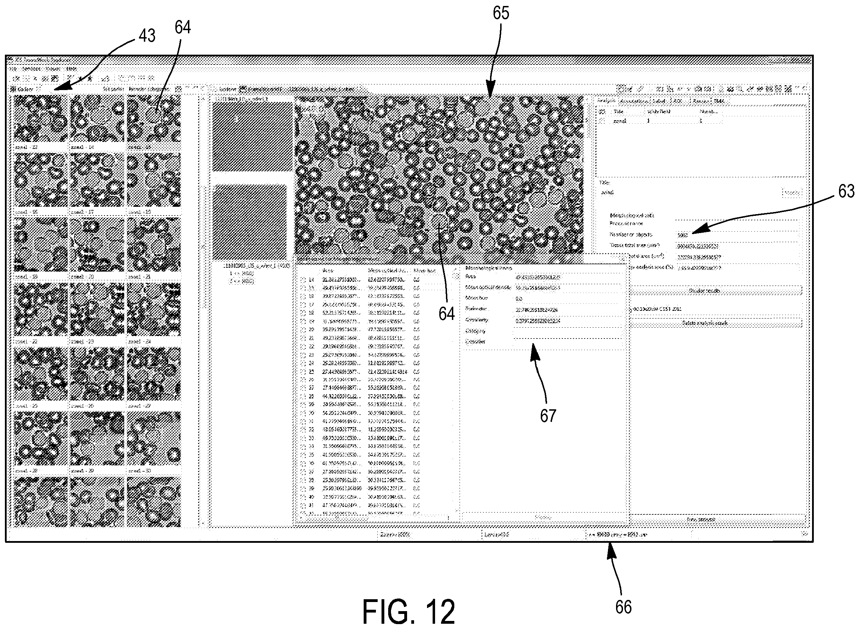

Les parties de l'image du plan de netteté, correspondant aux objets d'intérêts identifiés 41, et extraites du plan de meilleure netteté des compartiments cellulaires, sont alors envoyées par les moyens de traitement 22 dans une galerie 43 pour contrôle visuel, qui est affichée sur l'écran 42 et illustrée sur la figure 12. On voit dans l'exemple de la figure 12 (référence 63) que 5909 objets d'intérêts ont été ainsi repérés.

Les moyens de traitement 22 créent et mémorisent une base d'informations comprenant, pour chaque objet d'intérêt 64, un identifiant (typiquement un numéro d'identification propre à chaque objet d'intérêt) et les coordonnées spatiales 66 de cet objet d'intérêt, plus éventuellement sa taille et/ou son périmètre et/ou sa circularité et/ou sa densité optique moyenne et/ou son aire et/ou d'autres informations 67.

Le dispositif 11 permet un contrôle supplémentaire d'une image temps réel non mémorisée et obtenue par repositionnement du microscope aux coordonnées correspondantes d'un objet d'intérêt sélectionné pour acquisition d'image ou observation à fort grossissement (100x ou 150x).

Un contrôle a posteriori sera également effectué après la coloration de l'échantillon qui sera décrit par la suite, les cellules n'ayant pas changé de position horizontale X-Y parallèlement au plan de la lame (et donc parallèlement au plan focal de l'objectif 14 ou 15).

Ainsi, l'image de repérage acquise est analysée et traitée afin de répondre aux besoins suivants : repérer les éléments nucléés à partir d'une image défocalisée et utiliser les coordonnées horizontales X-Y (dans le plan de l'échantillon) des objets repérés pour établir la correspondance avec le plan image numérisé avec un contour net afin de disposer d'un premier contrôle utilisateur.

Ensuite, pour chaque objet d'intérêt déterminé pour lequel on souhaite acquérir des données discriminantes (comme par exemple l'objet 64 sélectionné sur l'écran de la figure 12), l'acquisition 27 de données discriminantes de cet objet d'intérêt par micro-spectroscopie Raman est réalisée de la manière suivante. L'acquisition de données discriminantes comprend une acquisition de données par micro-spectroscopie Raman sur l'échantillon 20 par le module de micro spectroscopie Raman. Les données discriminantes sont donc dans ce cas des données non morphologiques.

Les données discriminantes sont acquises directement sur l'échantillon 20, ladite acquisition ciblant, pour l'envoi du faisceau émis par la source 18, un endroit spécifique (résolution selon les axes X, Y, Z de respectivement 1, 1, 2 microns environ) de l'échantillon 20 où se trouve l'objet d'intérêt en se guidant au moyen de l'image numérisée (de repérage ou du plan de netteté).

Une région d'acquisition (typiquement des coordonnées spatiales d'au moins un point tel que son centre, complétées de dimensions comme sa largeur et sa longueur ou son diamètre) est définie :
- soit par annotation manuelle sur l'image numérisée (de préférence de repérage), par exemple via un clavier (non illustré) relié aux moyens de traitement ;
- soit par annotation automatique des moyens de traitement 22 sur l'image numérisée (de préférence de repérage).

L'objet 64 sélectionné est affiché sur l'écran 42 à sa taille nominale dans la zone d'observation numérisée 65 (environ 11000x11000 pixels) dans laquelle il est possible de naviguer avec les informations de coordonnées 66 (x,y) en microns sur la lame : x=49039, y=8942. Ces informations permettent de positionner la cellule sous le rayon excitateur du laser 18 à 532nm du module Raman et obtenir ainsi un ou plusieurs spectres sur une région d'environ 1micron² pour cette cellule.

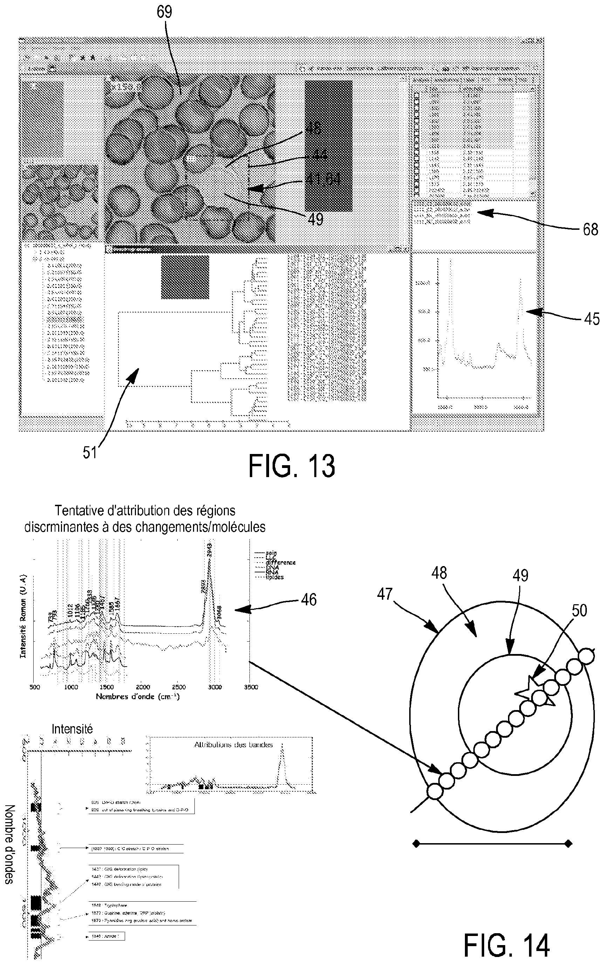

Dans tous les cas, les moyens de traitement 22 :
- analysent les coordonnées (coordonnées de son centre) de la région d'acquisition définie sur l'image numérisée de repérage, puis
- comme illustré sur la figure 13, guident le faisceau d'analyse du laser 18 sortant de l'objectif 15 par rapport à l'échantillon 20 de sorte que l'objectif 15 cible sur l'échantillon réel 20 des coordonnées correspondant aux coordonnées de la région d'acquisition 44 définie sur l'image numérisée, en commandant le dispositif motorisé 17.

Selon deux options, l'acquisition de données discriminantes Raman comprend :
- une mesure de micro spectroscopie Raman au centre de la région, ou
- plusieurs mesures de micro spectroscopie Raman réparties sur une ligne ou sur une matrice de points. On voit dans l'exemple de la figure 13 que quatre mesures 68 ont été effectuée pour la cellule « L111 », le spectre 45 correspondant à la mesure surlignée parmi les quatre mesures 68. Parmi ces quatre mesures, deux sont effectuées sur le cytoplasme 48, et deux sur le noyau 49 de la cellule sélectionnée 64. En effet, le procédé selon l'invention comprend une localisation de compartiments cellulaires des objets d'intérêts. Cette localisation de compartiments cellulaires est réalisée sur une image à plus haute résolution spatiale (sur la figure 13, image 69 obtenue avec l'objectif 15 de grossissement 150x) que l'image de la zone d'observation (sur la figure 12, image 65 obtenue avec l'objectif 14 de grossissement 40x). Cette localisation peut être manuelle via l'écran 42 et le clavier, ou réalisée de manière automatique par les moyens de traitement 22 via un algorithme de reconnaissance de critères morphologiques.

La plate-forme logicielle des moyens de traitement 22 prennent alors en charge l'acquisition d'un spectre Raman 45 ou 46 par point de mesure (en abscisses : décalage Raman en cm⁻¹ ; en ordonnées : Intensité relative, spectre qui est enregistré dans la mémoire des moyens de traitement 22 sous forme brute dans un fichier xml.

En référence à la figure 14, l'avantage des mesures sur une ligne ou sur une matrice de points est de permettre de faire des mesures dans plusieurs parties différentes d'une cellule, comme au niveau de la membrane 47, le cytoplasme 48, le noyau 49 ou le nucléole 50 de cette cellule, même sans connaître avec détail les positions de ces parties.

De même pour tous les autres objets d'intérêt de la zone d'observation jusqu'à l'analyse d'une population suffisante, préalablement repérée lors de la phase d'exploration. Dans le cas présent, on peut assurer dans un temps réduit par rapport à l'état de la technique antérieure une analyse automatique des noyaux d'un ou plusieurs milliers de lymphocytes !

La longueur d'onde d'excitation du laser 18 pour l'acquisition des données Raman est centrée sur 532nm afin de minimiser la pollution du signal Raman par le verre de la lame. En effet, plusieurs excitations ont été testées dans le but de choisir la longueur d'onde permettant de minimiser la fluorescence intrinsèque de l'échantillon tout en préservant son intégrité et en obtenant un bon rapport signal sur bruit. Sur la base des essais réalisés, l'utilisation des excitations dans le rouge (632,8 nm et 660) génère une fluorescence qui masque l'information vibrationnelle provenant de la cellulaire. On ne peut pas utiliser des excitations dans le proche infrarouge (785 et 830 nm) parce que la fluorescence du verre est très intense, mais que l'utilisation de lame de verre est une caractéristique technique très intéressante pour une utilisation économique et standard en laboratoire.

Chaque spectre Raman est enregistré dans les moyens d'enregistrement des moyens de traitement 22 dans la gamme spectrale 700-3170 cm⁻¹. Les essais réalisés ont permis de déterminer les conditions expérimentales d'acquisition des spectres Raman pour avoir des spectres avec un bon rapport signal sur bruit tout en éliminant les spikes (ou « pics » en français) et réduisant le signal provenant du support en verre (temps d'acquisition 10s, trou confocal 600 • m, profondeur d'analyse ± 1 • m).

Les données acquises par l'instrument Raman en utilisant des détecteurs CCD (« charge-coupled device ») sont caractérisées par des « spikes » occasionnels découlant d'événements associés aux rayons cosmiques. Ces spikes aléatoires sont superposés aux bandes spectrales chimiquement significatives. En raison de leurs hautes intensités, il est souvent crucial de filtrer les pics cosmiques avant l'analyse statistique multi-variée pour qu'ils n'interférent pas avec les outils statistiques. Pour enlever la majorité de ces spikes automatiquement, chaque spectre est enregistré en utilisant deux accumulations afin de détecter et éliminer les spikes et cela permet de plus d'augmenter le rapport signal sur bruit.

Pendant l'acquisition de données discriminantes, l'échantillon biologique est toujours dénué de colorant ou de marqueur additif par rapport à l'échantillon biologique tel que prélevé et existant à son état naturel. Il n'y a pas de préparation spéciale de l'échantillon, ni fixation ni incorporation de sonde moléculaire.

Ensuite, le procédé selon l'invention comprend une interprétation et/ou classification des spectres Raman par la plate forme logicielle des moyens de traitement 22 intégrant les outils de traitement et de classification des spectres Raman.

Les données discriminantes de MSR (micro-spectroscopie Raman) sont enregistrées dans les moyens d'enregistrement des moyens de traitement 22 pour chaque point de chaque lame dans un fichier associé à l'imagerie en format .xml et dans une base de données correspondante servant de base d'apprentissage. Les données brutes sont ainsi disponibles pour lancer un processus de classification.

Le traitement préalable des données par les moyens de traitement 22 est constitué des opérations suivantes :
- Soustraction du verre : estimation du signal du verre par moindres carrés sur la dérivée de chaque spectre et soustraction de sa contribution.
- Lissage par un filtre de Savitsky-Golay sur chaque spectre : afin de s'affranchir de l'influence du bruit dans la classification des données Raman, un lissage de Savitsky-Golay est appliqué à chaque spectre. Ce filtre a l'avantage d'éliminer efficacement le bruit haute fréquence tout en limitant la distorsion des spectres.
- Avant l'analyse statistique, il est indispensables d'évaluer la qualité des spectres afin d'écarter ceux présentant un faible rapport signal sur bruit ou une contamination trop importante par les spikes ou le signal des globules rouges. Trois tests de qualité sont développés : 1) rapport signal sur bruit, 2) rapport signal sur signal hématie, 3) recherche et élimination de spikes (rayonnements parasites exceptionnels). Le premier test calcule le rapport signal sur bruit pour chaque spectre (intensité intégrée de la bande entre 2800 et 3150 cm-1 sur bruit entre 1800 et 2200 cm-1). Ce test conserve pour la suite de l'analyse uniquement les spectres présentant un rapport signal sur bruit supérieur à un seuil fixé. Le deuxième test correspond au calcul d'un rapport signal de lymphocyte (région 1656 à 1720 cm-1) sur celui des globules rouges (région 1540 et 1656 cm-1). Les spectres dont le rapport est supérieur à une valeur fixée sont éliminés de l'analyse. Le troisième test permet d'éliminer les spectres contenant des spikes résiduels.
- Correction ligne de base par estimation polynomiale et soustraction de la ligne de base : l'émission de la fluorescence intrinsèque de l'échantillon biologique peut entraîner une distorsion de la ligne de base des spectres. Une procédure itérative d'estimation de la ligne de base par une fonction polynomiale est utilisée afin de soustraire la ligne de base sur les spectres acquis.
- Normalisation par la méthode de SNV (« Standard Normal Variate »): il est important de normaliser les spectres pour éliminer l'influence de la variation de l'intensité absolue du spectre. Les spectres sont normalisés par la méthode SNV ("Standard Normal Variate"). Un spectre normalisé par cette méthode satisfait à deux propriétés : sa moyenne est nulle, son écart-type est égal à un. Cette opération permet d'obtenir des données indépendantes de l'échelle choisie, et des variables ayant même moyenne et même dispersion.

Le spectromètre Raman 19 enregistre l'intensité de la lumière émise par l'échantillon 20 en fonction du nombre d'onde. Ceci implique que l'échelle des intensités et les nombres d'ondes doivent d'être calibrés très précisément. Le but de la calibration des nombres d'onde sur des systèmes dispersifs est d'attribuer le nombre d'onde à chaque canal individuel du détecteur (pixel). Dans ce cas, deux produits sont utilisés pour calibrer le dispositif : 4-acetamidophenol, cyclohexane. La position de ces bandes ont été mesurées sur un spectromètre Raman à transformée de Fourier dans six laboratoires différents.

En outre, l'efficacité du détecteur 19 ainsi que la transmission et/ou la réflexion des éléments optiques du spectromètre dépendent de la longueur d'onde. Cela implique que le profil du spectre Raman dépend de la composition moléculaire de l'échantillon et de la réponse de du dispositif. Il est donc indispensable de corriger cette réponse de l'instrument pour pouvoir comparer des données enregistrées sur différents dispositifs. Un spectre est enregistré sur un corps noir (DH-2000 deutérium, halogène, Mikropack). Pour corriger la réponse du dispositif, il suffit de multiplier tous les spectres enregistrés sur le spectromètre par l'inverse du spectre de l'émission du corps noir.

La classification s'effectue ensuite sur les données traitées en exploitant les régions de signatures discriminantes identifiées sur une série (ou base) d'apprentissage. Cette recherche de signature sur chaque spectre Raman par les moyens de traitement s'effectue en utilisant une méthode de sélection statistique de nombres d'ondes afin d'obtenir une signature discriminante. Une signature est un ensemble de nombres d'ondes sur chacun desquels est centré un pic ou un creux d'intensité ; l'ensemble des valeurs d'intensité associées à cet ensemble de nombres d'ondes est représentatif de signatures moléculaires de l'objet d'intérêt. Par exemple, un objet d'intérêt peut par exemple être classé dans la classe « contient tel type de molécule » ou « contient un parasite (de tel type)» ou « ne contient pas de parasite (de tel type)». Dans le cas d'un lymphocyte, un objet d'intérêt peut par exemple être classé dans la classe « pathologique » ou « non pathologique » ou alors dans la classe « pronostic favorable » ou « pronostic défavorable » dans le cas de lymphocytes pathologiques.

En haut à gauche de la figure 14 sont illustrés différents spectres 46, avec de haut en bas : région saine, région pathologique LLC, spectre représentatif des différences entre ces deux spectres, et spectres de molécules d'ADN, d'ARN et de lipides susceptibles d'expliquer les différences. Le spectre de différences n'est pas à l'échelle des autres spectres. Il y a environ un facteur dix de différence d'échelle.

En bas à gauche de la figure 14 est illustré un spectre Raman avec un détail de ce spectre où sont explicitées des régions correspondant à des liaisons moléculaires connues.

La classification s'effectue :
- soit avec une méthode supervisée SVM (« Séparateur à Vastes Marges » ou « Support Vector Machine »),
- soit sous la forme d'une classification non supervisée (« Hierarchical Clustering Analysis ») basée sur les distances euclidiennes mesurées entre spectres ; le résultat d'une telle classification peut être représenté graphiquement sous la forme d'un dendrogramme 51 comme illustré sur l'écran 42.

Cette classification peut s'effectuer directement si les mesures ont été effectuées sur un compartiment cellulaire identifié ou après sélection automatique des compartiments cellulaires par classification des mesures sur une ligne de points traversant chaque cellule.

Afin de garantir l'établissement d'un diagnostic automatique par MSR à partir d'un frottis sanguin, il est indispensable d'analyser exclusivement des spectres Raman enregistrés sur des lymphocytes. A cette fin, la base d'apprentissage est construite à partir de spectres Raman enregistrés sur des lymphocytes correspondant soit à des individus sains, soit à des individus pathologiques. Des méthodes de sélection de variables discriminantes (des nombres d'onde discriminants dans notre cas) basées sur des tests statistiques sont associées à des méthodes de classification supervisée afin d'estimer un modèle de prédiction du type cellulaire (pathologique ou non par exemple). Pour caractériser le contenu informatif de chaque compartiment cellulaire d'un objet d'intérêt, des spectres Raman sont enregistrés dans la base d'apprentissage pour noyau, cytoplasme, et nucléole. Ceci permet d'étudier sélectivement le pouvoir discriminant de ces compartiments en particulier pour le pronostic des LLCs. Pour chaque compartiment cellulaire, une réduction d'information est réalisée sur les spectres Raman par sélection ou extraction de variables. Puis des méthodes de classification supervisée permettent d'entraîner un classificateur par compartiment cellulaire ou sur des combinaisons de compartiments cellulaires pour discriminer des classes cytologiques. L'analyse des capacités de prédiction de chaque classificateur permet de choisir le(s) compartiment(s) cellulaire(s) le(s) plus informatif(s) sur la pathologie étudiée.

Ainsi, le procédé selon l'invention comprend une classification, par les moyens de traitement 22, des données discriminantes MSR acquises. Cette classification se fait par type d'objet d'intérêt (type cellulaire), par une mise en relation entre les données discriminantes acquises et une base d'apprentissage. La base d'apprentissage met en relation un type d'objet d'intérêt (type cellulaire) avec des caractéristiques de données discriminantes.

En outre, le procédé selon l'invention peut donc comprendre une classification, par les moyens de traitement 22, des données discriminantes acquises par type de compartiment cellulaire, par une mise en relation entre les données discriminantes acquises et la base d'apprentissage mettant en relation un type de compartiment cellulaire avec des caractéristiques de données discriminantes.

On va maintenant décrire un deuxième exemple de procédé selon l'invention (correspond à la colonne 53 de la figure 3), uniquement pour ses différences par rapport au premier exemple (correspond à la colonne 52 de la figure 3).

Dans ce deuxième exemple, le procédé selon l'invention comprend, après (flèche 54) ou en lieu (flèche 55) de l'acquisition de données discriminantes :
- une coloration 71 de l'échantillon par addition d'un colorant, et
- une acquisition 72 de données morphologiques (typiquement des images, de préférence multi-spectrales ou à différents plan de focalisation (« multi-Z »), et/ou une ou plusieurs données morphologiques (taille, forme, etc..) de préférence extraites de ces images) d'au moins un objet intérêt déterminé (de préférence de plusieurs, de manière encore plus préférentielle de chaque objet d'intérêt), sur l'échantillon biologique coloré par le colorant, les données morphologiques étant collectées via des moyens d'imagerie agencés pour construire une image de l'échantillon tel que colorée par le colorant, plus exactement par le module d'imagerie microscopique et par les moyens de traitement 22.

La nature des données discriminantes acquises à l'étape 27 est différente de la nature des données morphologiques acquises à l'étape 53.

Pour les LLC, les objets d'intérêt sont les lymphocytes. La méthode habituelle de caractérisation des lymphocytes est basée sur l'observation des caractéristiques morphologiques de frottis colorés avec un kit de coloration May Grunwald Giemsa. Après les mesures Raman, l'échantillon frottis est donc coloré avec ce kit de coloration et observé au microscope (objectif 15) pour confirmer l'identification des lymphocytes.

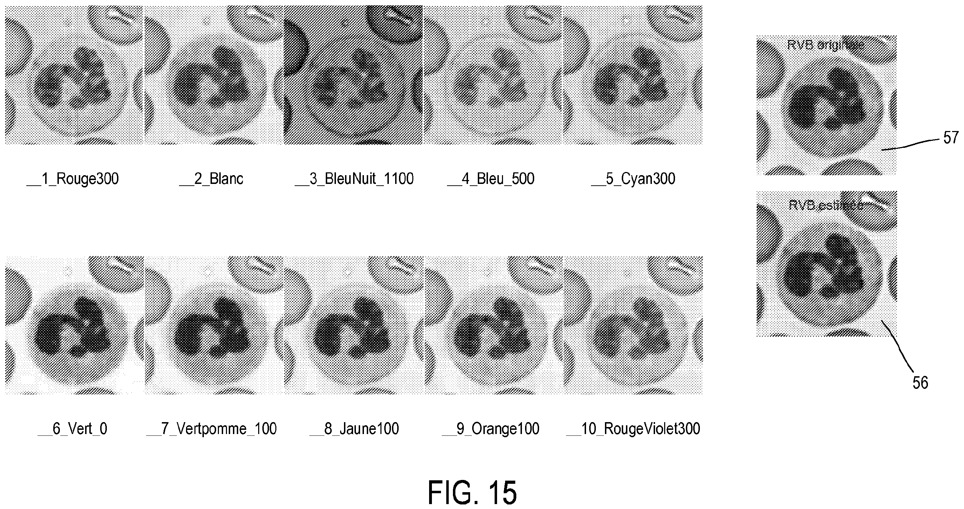

Pour l'acquisition des données morphologiques, les objets d'intérêts (lymphocytes, idéalement préalablement analysés en MSR) sont imagés suivant différentes bandes spectrales (imagerie multi-spectrale (MS) comme illustré sur la figure 15) et/ou à différents plans focaux des objets d'intérêts selon l'axe Z (imagerie multi-Z (MZ), permettant par exemple de combiner, par les moyens de traitement 22, une image dans le plan focal de la membrane 47 où cette membrane est bien nette, une image dans le plan focal du cytoplasme 48 où ce cytoplasme est bien net, une image dans le plan focal du noyau 49 où ce noyau est bien net, et une image dans le plan focal du nucléole 50 où ce nucléole 50 est bien net). Ainsi, les données morphologiques comprennent des données d'imagerie multi spectrale et/ou multi-Z de l'échantillon 20, à partir desquelles les moyens de traitement 22 extraient des données telles que la taille ou la forme de l'objet d'intérêt ou la présence, la taille, la forme ou la texture d'un des éléments constitutifs de l'objet d'intérêt.

Ainsi, les images acquises qui sont à la fois multi-spectrales et multi-Z (car chaque couleur ou bande spectrale correspond à un plan focal différent) sont analysées et traitées par les moyens de traitement 22 afin de répondre aux besoins suivants: exploiter les données acquises pour constituer une information de classification, estimer et reconstruire une image couleur Rouge Vert Bleu (RVB) 56 à partir de plusieurs images à des fins de contrôle visuel. Par exemple, dans le cas d'images multi-spectrales, cela est représenté sur la figure 15 : l'image couleur 56 reconstituée à partir de neuf bandes spectrales est comparée à l'image acquise 57 avec une caméra RVB.

Sur le même principe que pour les données discriminantes non morphologiques tel que décrit ci-dessus, le procédé selon l'invention comprend en outre une classification, par les moyens de traitement 22, des données morphologiques acquises par type d'objet (type cellulaire), par une mise en relation entre les données morphologiques acquises et une base d'apprentissage mettant en relation un type d'objet d'intérêt avec des caractéristiques de données morphologiques.

Sur le même principe que pour les données discriminantes non morphologiques tel que décrit ci-dessus, le procédé selon l'invention comprend en outre une classification, par les moyens de traitement 22, des données morphologiques acquises par type de compartiment cellulaire, par une mise en relation entre les données morphologiques acquises et une base d'apprentissage mettant en relation un type de compartiment cellulaire avec des caractéristiques de données morphologiques.

De manière préférentielle, une imagerie MS/MZ est produite pour extraire des critères morphologiques raffinés susceptibles d'être corrélés à la classification Raman.

Dans le cas où données discriminantes non morphologiques (Raman) et des données morphologiques sont acquises (flèche 54), le procédé selon l'invention comprend en outre une fusion et/ou une corrélation, par les moyens de traitement 22, entre les données discriminantes non morphologiques et les données morphologiques d'un même objet d'intérêt.

Dans une étape ultérieure, un rapprochement des données Raman et morphologiques (Multi-spectrales et/ou Multi-Z) avec des données patient permet d'établir une relation entre spectres et données pronostiques du dossier patient.

On va maintenant décrire un troisième exemple de procédé selon l'invention (correspond à la colonne 58 de la figure 3), uniquement pour ses aspects différents par rapport au deuxième exemple.

Dans ce troisième exemple, l'échantillon 20 est un prélèvement sanguin pour lequel on suspecte la présence de parasites de la Malaria.

Ainsi, selon un premier aspect, les objets d'intérêts sont ici les parasites de la Malaria.

Selon un autre aspect, l'obtention de l'image de la zone d'observation comprend l'obtention d'une image de l'échantillon par image de phase quantitative.

Les flèches 54 et 55 sont remplacées sur la figure 3 par les flèches 59 et 60.

Bien sûr, l'invention n'est pas limitée aux exemples qui viennent d'être décrits et de nombreux aménagements peuvent être apportés à ces exemples sans sortir du cadre de l'invention.

Par exemple, en variante de l'un quelconque des exemples venant d'être précédemment décrit, l'échantillon biologique peut être coloré avec une coloration de contraste pendant l'obtention de l'image de la zone d'observation à numériser et/ou pendant l'acquisition de données discriminantes. Par exemple, dans le cas ou les données discriminantes sont morphologiques (cas des flèches 55 et 60 sur la figure 3), l'échantillon peut être coloré avant de réaliser la lame virtuelle.

En outre, en variante de l'un quelconque des exemples venant d'être précédemment décrit, l'échantillon biologique peut comprendre, à la place d'un frottis sanguin, un prélèvement cytologique ou une coupe d'un tissu biologique (cette coupe étant découpée typiquement dans des tissus congelés ou contenus dans de la paraffine).

En outre, de manière générale, les objets biologiques et donc éventuellement les objets d'intérêts de l'échantillon biologique peuvent comprendre des cellules biologiques (de préférence nucléées), des bactéries, des parasites et/ou des fibres biologiques reliant des cellules.

## Revendications

1. Procédé d'analyse d'un échantillon biologique (20) comprenant des objets biologiques (1-10), ledit procédé comprenant :
- une obtention (25) d'une image (38, 39, 65) d'une zone d'observation de l'échantillon par une imagerie optique de l'échantillon comprenant l'obtention d'une image défocalisée par rapport à un plan des objets d'intérêts pour un repérage d'éléments nucléés ou l'obtention d'une image de l'échantillon par image de phase quantitative ou l'obtention d'une image de l'échantillon par imagerie multispectrale, et une mémorisation de cette image sous forme numérisée, l'échantillon biologique étant dénué de colorant ou de marqueur additif pendant l'obtention (25) d'une image de la zone d'observation, puis
- une analyse (26) de l'image numérisée et une détermination, sur cette image numérisée, d'objets biologiques d'intérêts (41) dans l'échantillon, puis
- pour au moins un objet d'intérêt déterminé (41), une acquisition (27) de données discriminantes (45, 46) non morphologiques moléculaires de cet objet d'intérêt directement sur l'échantillon, par micro-spectroscopie Raman, ladite acquisition ciblant un endroit spécifique de l'échantillon où se trouve l'objet d'intérêt, cet endroit spécifique correspondant à une région d'acquisition définie sur l'image numérisée.

2. Procédé selon la revendication 1, **caractérisé en ce que** l'image de la zone d'observation est obtenue par un ensemble de champs (28) obtenus distinctement.

3. Procédé selon la revendication 1 ou 2, **caractérisé en ce que** l'image de la zone d'observation est une image comprenant des pixels répartis sur au moins deux dimensions spatiales, l'obtention (25) de l'image de la zone d'observation comprenant une acquisition d'au moins 50 000 pixels par seconde.

4. Procédé selon l'une quelconque des revendications précédentes, **caractérisé en ce que** l'obtention (25) de l'image de la zone d'observation comprend l'obtention d'une image défocalisée (39) par rapport à un plan des objets d'intérêts.

5. Procédé selon l'une quelconque des revendications 1 à 3, **caractérisé en ce que** l'obtention (25) de l'image de la zone d'observation comprend l'obtention d'une image de l'échantillon par image de phase quantitative.

6. Procédé selon l'une quelconque des revendications 1 à 3, **caractérisé en ce que** l'obtention (25) de l'image de la zone d'observation comprend l'obtention d'une image de l'échantillon par imagerie multispectrale et à différents plans focaux.

7. Procédé selon l'une quelconque des revendications précédentes, **caractérisé en ce qu'**il comprend une localisation de compartiments cellulaires des objets d'intérêts.

8. Procédé selon l'une quelconque des revendications précédentes, **caractérisé en ce qu'**il comprend en outre une classification des données discriminantes (45, 46) acquises par type cellulaire, par une mise en relation entre les données discriminantes acquises et une base d'apprentissage mettant en relation un type d'objet d'intérêt avec des caractéristiques de données discriminantes.

9. Procédé selon l'une quelconque des revendications précédentes, **caractérisé en ce qu'**il comprend, après l'acquisition (27) de données discriminantes :
- une coloration (71) de l'échantillon par addition d'un colorant, et
- une acquisition (72) de données morphologiques d'au moins un objet d'intérêt déterminé, sur l'échantillon biologique coloré par le colorant, les données morphologiques étant collectées via des moyens d'imagerie (15, 16, 22) agencés pour construire une image de l'échantillon tel que colorée par le colorant.

10. Procédé selon la revendication 9, **caractérisé en ce que** les données morphologiques comprennent des données d'imagerie multi-spectrale de l'échantillon (20) et/ou d'imagerie à différents plans focaux des objets d'intérêts de l'échantillon.

11. Procédé selon la revendication 9 ou 10, **caractérisé en ce qu'**il comprend en outre une classification des données morphologiques acquises par type cellulaire, par une mise en relation entre les données morphologiques acquises et une base d'apprentissage mettant en relation un type d'objet d'intérêt avec des caractéristiques de données morphologiques.

12. Procédé selon l'une quelconque des revendications 9 à 11, **caractérisé en ce qu'**il comprend en outre une fusion et/ou une corrélation entre les données discriminantes et les données morphologiques d'au moins un même objet intérêt.

13. Dispositif d'analyse d'un échantillon biologique comprenant des objets biologiques, ledit dispositif comprenant :
- des moyens d'imagerie optique de l'échantillon agencés pour obtenir une image d'une zone d'observation de l'échantillon prévus pour l'obtention de l'image de la zone d'observation alors que l'échantillon biologique est dénué de colorant et/ou de marqueur additif, ces moyens étant agencés pour obtenir une image de la zone d'observation défocalisée par rapport à un plan des objets d'intérêts pour un repérage d'éléments nucléés ou obtenir l'image de la zone d'observation par image de phase quantitative ou obtenir une image de l'échantillon par imagerie multispectrale, et des moyens pour mémoriser cette image sous forme numérisée,
- des moyens pour analyser l'image numérisée et pour déterminer, sur cette image numérisée, des objets biologiques d'intérêts dans l'échantillon,
- des moyens pour acquérir, par micro-spectroscopie Raman, pour au moins un objet d'intérêt déterminé, des données discriminantes non morphologiques moléculaires de cet objet d'intérêt directement sur l'échantillon, les moyens d'acquisition étant agencés pour acquérir les données discriminantes en ciblant un endroit spécifique de l'échantillon où se trouve l'objet d'intérêt, cet endroit spécifique correspondant à une région d'acquisition définie sur l'image numérisée.

## Patentansprüche

1. Verfahren zur Analyse einer biologischen Probe (20) enthaltend biologische Objekte (1-10), wobei das Verfahren umfasst:
- eine Gewinnung (25) eines Bildes (38, 39, 65) einer Beobachtungszone der Probe durch eine optische Bildaufnahme der Probe, umfassend die Gewinnung eines hinsichtlich einer Ebene von Objekten von Interesse defokussierten Bildes für eine Auffindung von kernhaltigen Elementen oder die Gewinnung eines Bildes der Probe durch ein quantitatives Phasenbild oder die Gewinnung eines Bildes der Probe durch multispektrale Bildaufnahme, und Speichern dieses Bildes in digitalisierter Form, wobei die biologische Probe während der Gewinnung (25) eines Bildes der Beobachtungszone frei von Farbstoffen oder Zusatzmarkern ist, dann
- eine Analyse (26) des digitalisierten Bildes und eine Bestimmung von biologischen Objekten von Interesse (41) in der Probe auf dem digitalisierten Bild, dann
- für mindestens ein bestimmtes Objekt von Interesse (41) eine Erfassung (27) von molekularen nicht-morphologischen Bestimmungsdaten (45, 46) dieses Objekts von Interesse direkt an der Probe durch Raman-Mikrospektroskopie, wobei diese Erfassung auf eine bestimmte Stelle der Probe zielt, an der sich das Objekt von Interesse befindet, wobei diese bestimmte Stelle einem auf dem digitalisierten Bild definierten Erfassungsbereich entspricht.

2. Verfahren nach Anspruch 1, **dadurch gekennzeichnet, dass** das Bild der Beobachtungszone durch eine Reihe von separat aufgenommenen Feldern (28) gewonnen wird.

3. Verfahren nach Anspruch 1 oder 2, **dadurch gekennzeichnet, dass** das Bild der Beobachtungszone ein Bild mit Pixeln ist, die über mindestens zwei räumliche Dimensionen verteilt sind, wobei die Gewinnung (25) des Bildes der Beobachtungszone eine Erfassung von mindestens 50.000 Pixeln pro Sekunde umfasst.

4. Verfahren nach einem der vorhergehenden Ansprüche, **dadurch gekennzeichnet, dass** die Gewinnung (25) des Bildes der Beobachtungszone die Gewinnung eines hinsichtlich einer Ebene von Objekten von Interesse defokussierten Bildes (39) umfasst.

5. Verfahren nach einem der Ansprüche 1 bis 3, **dadurch gekennzeichnet, dass** die Gewinnung (25) des Bildes der Beobachtungszone die Gewinnung eines Bildes der Probe durch ein quantitatives Phasenbild umfasst.

6. Verfahren nach einem der Ansprüche 1 bis 3, **dadurch gekennzeichnet, dass** die Gewinnung (25) des Bildes der Beobachtungszone die Gewinnung eines Bildes der Probe durch multispektrale und in verschiedenen Fokusebenen erfolgende Bildaufnahme umfasst.

7. Verfahren nach einem der vorhergehenden Ansprüche, **dadurch gekennzeichnet, dass** es eine Lokalisierung von Zellkompartimenten von Objekten von Interesse umfasst.

8. Verfahren nach einem der vorhergehenden Ansprüche, **dadurch gekennzeichnet, dass** es ferner eine Klassifizierung der erfassten Bestimmungsdaten (45, 46) nach Zelltypen umfasst, indem die erfassten Bestimmungsdaten mit einer Lernbasis in Beziehung gesetzt werden, die einen Typ des Objekts von Interesse mit Merkmalen der Bestimmungsdaten in Beziehung setzt.

9. Verfahren nach einem der vorhergehenden Ansprüche, **dadurch gekennzeichnet, dass** es nach der Erfassung (27) der Bestimmungsdaten umfasst:
- eine Färbung (71) der Probe durch Zugabe eines Farbstoffs, und
- eine Erfassung (72) von morphologischen Daten von mindestens einem bestimmten Objekt von Interesse an der mit dem Farbstoff gefärbten biologischen Probe, wobei die morphologischen Daten über Bildaufnahmemittel (15, 16, 22) erfasst werden, die dazu ausgelegt sind, ein Bild der mit dem Farbstoff gefärbten Probe zu erstellen.

10. Verfahren nach Anspruch 9, **dadurch gekennzeichnet, dass** die morphologischen Daten multispektrale Bildaufnahmedaten der Probe (20) und/oder Bildaufnahmedaten von Objekten von Interesse der Probe in verschiedenen Fokusebenen umfassen.

11. Verfahren nach Anspruch 9 oder 10, **dadurch gekennzeichnet, dass** es ferner eine Klassifizierung der erfassten morphologischen Daten nach Zelltypen umfasst, indem die erfassten morphologischen Daten mit einer Lernbasis in Beziehung gesetzt werden, die einen Typ eines Objekts von Interesse mit Merkmalen von morphologischen Daten in Beziehung setzt.

12. Verfahren nach einem der Ansprüche 9 bis 11, **dadurch gekennzeichnet, dass** es ferner eine Zusammenführung und/oder eine Verknüpfung zwischen den Bestimmungsdaten und den morphologischen Daten von mindestens einem gleichen Objekt von Interesse umfasst.

13. Vorrichtung zur Analyse einer biologischen Probe enthaltend biologische Objekte, wobei die Vorrichtung aufweist:
- Mittel zur optischen Bildaufnahme der Probe, die dazu ausgelegt sind, ein Bild einer Beobachtungszone der Probe zu gewinnen, die dazu vorgesehen sind, das Bild der Beobachtungszone zu gewinnen, während die biologische Probe frei von Farbstoffen und/oder Zusatzmarkern ist, wobei diese Mittel dazu ausgelegt sind, ein Bild der Beobachtungszone zu gewinnen, das hinsichtlich einer Ebene von Objekten von Interesse defokussiert ist, um kernhaltige Elemente zu lokalisieren, oder das Bild der Beobachtungszone durch ein quantitatives Phasenbild zu gewinnen oder ein Bild der Probe durch multispektrale Bildaufnahme zu gewinnen, und Mittel zum Speichern dieses Bildes in digitalisierter Form,
- Mittel zum Analysieren des digitalisierten Bildes und zum Bestimmen von biologischen Objekten von Interesse in der Probe auf dem digitalisierten Bild,
- Mittel zum Erfassen, durch Raman-Mikrospektroskopie, für mindestens ein bestimmtes Objekt von Interesse, von molekularen nicht-morphologischen Bestimmungsdaten dieses Objekts von Interesse direkt an der Probe, wobei die Erfassungsmittel dazu ausgelegt sind, die Bestimmungsdaten zu erfassen durch Abzielen auf eine bestimmte Stelle der Probe, an der sich das Objekt von Interesse befindet, wobei diese bestimmte Stelle einem auf dem digitalisierten Bild definierten Erfassungsbereich entspricht.

## Claims

1. Method of analyzing a biological sample (20) comprising biological objects (1-10), said method comprising:
- obtaining (25) an image (38, 39, 65) of an observation zone of the sample by an optical imaging of the sample comprising obtaining an image that is defocused in relation to a plane of the objects of interest for an identification of nucleated elements or obtaining an image of the sample by quantitative phase imaging or obtaining an image of the sample by multispectral imaging, and storing this image in digitized form, the biological sample being devoid of dye or additive marker during the obtaining (25) of an image of the observation zone,
then
- analyzing (26) the digitized image and determining, on this digitized image, biological objects of interest (41) in the sample,
then,
- for at least one determined object of interest (41), acquiring (27) non-morphological molecular discriminating data (45, 46) for this object of interest directly on the sample, by Raman microspectroscopy, said acquisition targeting a specific location of the sample where the object of interest is located, this specific location corresponding to an acquisition region defined on the digitized image.

2. Method according to claim 1, **characterized in that** the image of the observation zone is obtained by a set of separately obtained fields (28).

3. Method according to claim 1 or 2, **characterized in that** the image of the observation zone is an image comprising pixels distributed over at least two spatial dimensions, the obtaining (25) of the image of the observation zone comprising an acquisition of at least 50,000 pixels per second.

4. Method according to any one of the preceding claims, **characterized in that** the obtaining (25) of the image of the observation zone comprises obtaining an image (39) that is defocused in relation to a plane of the objects of interest.

5. Method according to any one of claims 1 to 3, **characterized in that** the obtaining (25) of the image of the observation zone comprises obtaining an image of the sample by quantitative phase imaging.

6. Method according to any one of claims 1 to 3, **characterized in that** the obtaining (25) of the image of the observation zone comprises obtaining an image of the sample by multispectral imaging and in different focal planes.

7. Method according to any one of the preceding claims, **characterized in that** it comprises locating cellular compartments of the objects of interest.

8. Method according to any one of the preceding claims, **characterized in that** it further comprises classifying the acquired discriminating data (45, 46) by cell type, by linking the acquired discriminating data and a learning base linking a type of object of interest with characteristics of discriminating data.

9. Method according to any one of the preceding claims, **characterized in that** it comprises, after the acquisition (27) of discriminating data:
- dyeing (71) the sample by adding a dye, and
- acquiring (72) morphological data for at least one determined object of interest, on the biological sample dyed by the dye, the morphological data being collected via imaging means (15, 16, 22) arranged to construct an image of the sample as dyed by the dye.

10. Method according to claim 9, **characterized in that** the morphological data comprise multispectral imaging data of the sample (20) and/or imaging data in different focal planes of the objects of interest of the sample.

11. Method according to claim 9 or 10, **characterized in that** it further comprises classifying the acquired morphological data by cell type, by linking the acquired morphological data and a learning base linking a type of object of interest with characteristics of morphological data.

12. Method according to any one of claims 9 to 11, **characterized in that** it further comprises a merging and/or a correlation between the discriminating data and the morphological data of at least one and the same object of interest.

13. Device for analyzing a biological sample comprising biological objects, said device comprising:
- means for optical imaging of the sample arranged to obtain an image of an observation zone of the sample provided to obtain the image of the observation zone while the biological sample is devoid of dye and/or additive marker, these means being arranged to obtain an image of the observation zone that is defocused in relation to a plane of the objects of interest for an identification of nucleated elements or to obtain the image of the observation zone by quantitative phase imaging or to obtain an image of the sample by multispectral imaging, and means for storing this image in digitized form,
- means for analyzing the digitized image and for determining, on this digitized image, biological objects of interest in the sample,
- means for acquiring, by Raman microspectroscopy, for at least one determined object of interest, non-morphological molecular discriminating data for this object of interest directly on the sample, the acquisition means being arranged to acquire the discriminating data by targeting a specific location of the sample where the object of interest is located, this specific location corresponding to a defined acquisition region on the digitized image.
